# EUROPÄISCHE PATENTSCHRIFT

(11) **EP 3 669 109 B1**
(45) Veröffentlichungstag und Bekanntmachung des Hinweises auf die Patenterteilung: **24.11.2021**
(21) Anmeldenummer: 18755166.8
(22) Anmeldetag: 07.08.2018
(51) Int. Cl.: F16L 3/10

(54) **SCHELLE MIT VERSCHLUSSKLAPPE IN DER DURCHGANGSÖFFNUNG FÜR DEN VERSCHLUSSZAPFEN**
CLAMP WITH CLOSING FLAP IN THE PASSAGE OPENING FOR THE PLUG
COLLIER POURVU DE PATTE DE FERMETURE DANS L'OUVERTURE DE PASSAGE POUR BOUCHON DE FERMETURE

(30) Priorität: 17.08.2017 EP 17186637
(43) Veröffentlichungstag der Anmeldung: 24.06.2020
(73) Patentinhaber: Hilti Aktiengesellschaft, 9494 Schaan (LI)
(72) Erfinder: OHM, Konstantin, 2700 Wiener Neustadt (AT); BENGTSSON, Philip, 1120 Wien (AT)
(74) Vertreter: Hilti Aktiengesellschaft Corporate Intellectual Property
(86) Internationale Anmeldenummer: PCT/EP2018/071336
(87) Internationale Veröffentlichungsnummer: WO 2019/034471

(56) Entgegenhaltungen:
- EP-A1- 0 471 989
- EP-A1- 1 978 288
- EP-A1- 2 588 788
- EP-A1- 3 128 217
- DE-A1- 4 026 636
- DE-A1- 4 124 122
- DE-A1- 4 213 864

## Beschreibung

Die Erfindung betrifft eine Schelle aufweisend einen Schellenring mit einem Aufnahmeraum zum Aufnehmen eines länglichen Gegenstandes, eine Einführöffnung zum Einführen des länglichen Gegenstandes in den Aufnahmeraum und einen Verschluss zum Verschliessen der Einführöffnung, wobei der Verschluss einen an einem ersten Endbereich des Schellenrings am Schellenring angeordneten Verschlusszapfen, eine an einem zweiten Endbereich des Schellenrings im Schellenring angeordnete Durchgangsöffnung für den Verschlusszapfen und eine am zweiten Endbereich des Schellenrings angeordnete Verschlussklappe zum Fangen des Verschlusszapfens in der Durchgangsöffnung aufweist.

Eine gattungsgemässe Schelle mit einem Verschluss mit einem Rastmechanismus zum Fangen des Verschlusszapfens am gegenüberliegenden Ende des Schellenrings ist aus der DE4213864 A1 bekannt. Weitere Schellen mit Rastmechanismus sind aus der EP 3128217 A1, der DE 4237674 A1, der DE 4026636 A1 und der EP 2691677 A1 bekannt.

Aufgabe der Erfindung ist es, eine Schelle mit einem besonders materialsparenden und zugleich konstruktiv besonders einfachen und zuverlässigen Verschluss anzugeben,

Die Aufgabe wird erfindungsgemäss durch eine Schelle mit den Merkmalen des Anspruchs 1 gelöst. Bevorzugte Ausführungsformen sind in den abhängigen Ansprüchen angegeben.

Eine erfindungsgemässe Schelle ist dadurch gekennzeichnet, dass die Verschlussklappe die Durchgangsöffnung für den Verschlusszapfen unter Bildung eines Gelenks durchläuft.

Ein Grundgedanke der Erfindung kann darin gesehen werden, die Verschlussklappe an derselben Durchgangsöffnung schwenkbar zu lagern, durch welche auch die Verschlussklappe durchgeführt ist. Hierdurch kann bei besonders geringem Aufwand und hoher Zuverlässigkeit eine besonders kompakte und materialsparende Bauform, insbesondere mit kurzer Verschlussklappe, kurzem zweiten Endbereich und/oder kurzem Verschlusszapfen, erhalten werden.

Der erste und/oder zweite Endbereich des Schellenrings kann insbesondere ein Flansch sein. Insbesondere sind die beiden Endbereiche an entgegengesetzten Enden des Schellenrings angeordnet. Die Durchgangsöffnung bildet eine Durchbrechung des Schellenrings im zweiten Endbereich. Die Verschlussklappe fängt den Verschlusszapfen in der Durchgangsöffnung, das heisst sie sorgt dafür, dass der einmal in die Durchgangsöffnung eingesteckte Verschlusszapfen nicht ohne weiteres wieder aus der Durchgangsöffnung herausgezogen werden kann. Die Verschlussklappe kann in einer Fangposition die Durchgangsöffnung teilweise verschliessen, so dass der Verschlusszapfen nicht herausgezogen werden kann, und in einer Durchgangsposition einen Eintritt des Verschlusszapfens in die Durchgangsöffnung erlauben. Insbesondere kann der Verschluss als Rastmechanismus ausgeführt sein und/oder die Verschlussklappe eine Raste für den Verschlusszapfen bilden. Der Verschlusszapfen ist im ersten Endbereich des Schellenrings mit dem Schellenring verbunden, beispielsweise verschraubt. An der Einführöffnung ist der unverschlossene Schellenring zum Einbringen des länglichen Gegenstandes in den Aufnahmeraum offen.

Besonders bevorzugt ist es, dass die Schelle einen elastischen Ring zum Schliessen der Verschlussklappe aufweist, welcher vorzugsweise den zweiten Endbereich des Schellenrings umspannt. Hierdurch kann bei guter Zuverlässigkeit der konstruktive Aufwand für Verschluss noch weiter reduziert werden.

Insbesondere kann vorgesehen sein, dass die Verschlussklappe in den elastischen Ring eingehakt ist. Hierzu kann die Verschlussklappe beispielsweise einen endseitigen, abgekanteten Hakenbereich aufweisen, entlang dem der elastische Ring verläuft. Hierdurch kann die Verschlussklappe in besonders einfacher Weise gegen ein unerwünschtes Verschieben oder gar Herausfallen aus der regelmässig vergleichsweise grossen Durchgangsöffnung gesichert werden.

Besonders bevorzugt ist es, dass der elastische Ring an einer der Einführöffnung und/oder dem ersten Endbereich zugewandten Seite der Verschlussklappe, das heisst insbesondere schelleninnenseitig, gegen die Verschlussklappe wirkt und/oder dort an der Verschlussklappe anliegt. Hierdurch kann einerseits in konstruktiv besonders einfacher Weise eine Verhakung der Verschlussklappe mit dem elastischen Ring realisiert werden. Andererseits kann hierdurch der elastische Ring in konstruktiv besonders einfacher Weise und bei besonders kompakter Bauform versetzt zur Durchgangsöffnung angeordnet werden, so dass er dem Verschlusszapfen nicht im Weg ist und die Verwendung der Schelle noch weiter vereinfacht ist.

Weiterhin ist es bevorzugt, dass die Verschlussklappe die Durchgangsöffnung an einer dem Aufnahmeraum zugewandten, das heisst dem Aufnahmeraum fernen Aussenwand der Durchgangsöffnung durchläuft. Insbesondere liegt die Verschlussklappe an dieser Aussenwand der Durchgangsöffnung an, das heisst die Verschlussklappe berührt diese Aussenwand. Die Verschlussklappe durchläuft die Durchgangsöffnung also in einem Bereich, der vergleichsweise weit vom Aufnahmeraum entfernt ist, und das Gelenk ist an der Aussenwand der Durchgangsöffnung gebildet, was im Hinblick auf die Zuverlässigkeit und den konstruktiven Aufwand vorteilhaft sein kann. Insbesondere kann vorgesehen sein, dass die Verschlussklappe beim Übergang von der Fangposition in die Durchgangsposition vom Aufnahmeraum des Schellenrings hinweg nach aussen schwenkt.

Der Verschlusszapfen könnte beispielsweise eine Raststange mit mehreren übereinander angeordneten Ausnehmungen für die Verschlussklappe sein. Besonders bevorzugt ist es, dass der Verschlusszapfen eine Schraube mit einem Schraubenkopf ist, wobei die Verschlussklappe zum Fangen des Schraubenkopfs vorgesehen ist. Dies kann im Hinblick auf die Herstellungskosten vorteilhaft sein.

Die Erfindung wird nachfolgend anhand bevorzugter Ausführungsbeispiele näher erläutert, die schematisch in den beiliegenden Figuren dargestellt sind, wobei einzelne Merkmale der nachfolgend gezeigten Ausführungsbeispiele im Rahmen der Erfindung grundsätzlich einzeln oder in beliebiger Kombination realisiert werden können. In den Figuren zeigen schematisch:
- Figur 1:: eine perspektivische Darstellung einer erfindungsgemässen Schelle mit verschlossener Einführöffnung;
- Figur 2:: eine Detailansicht der Schelle aus Figur 1 im Bereich ihres zweiten Endbereichs, von der Einführöffnung aus gesehen;
- Figur 3:: eine Detailansicht entsprechend Figur 2, jedoch ohne den elastischen Ring;
- Figur 4:: eine geschnittene Detailansicht der Schelle aus Figur 1 im Bereich ihres zweiten Endbereichs; und

- Figur 5:: eine Detailansicht der Schelle aus Figur 1 im Bereich ihres zweiten Endbereichs mit anderer Blickrichtung, nämlich mit Blick von ausserhalb der Schelle.

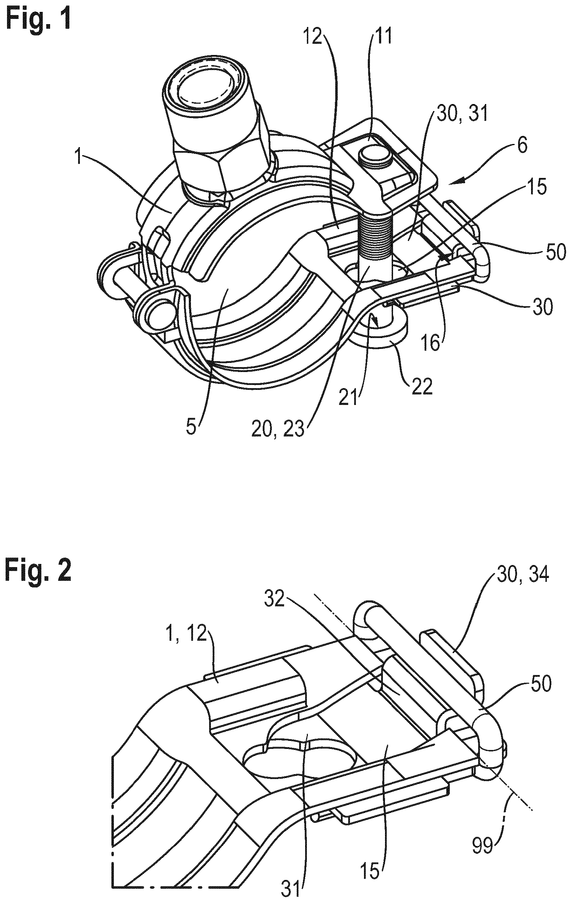

Die Figuren 1 bis 5 zeigen ein Ausführungsbeispiel einer erfindungsgemässen Schelle. Die Schelle weist einen Schellenring 1 mit einem etwa zylindrischen Aufnahmeraum 5 für einen nicht dargestellten länglichen Gegenstand, insbesondere ein Rohr, ein Kabel oder eine Stange, auf. Im dargestellten Ausführungsbeispiel ist der Schellenring 1 zweiteilig mit zwei Schellenbügeln ausgeführt, die über ein Scharnier miteinander verbunden sind, wobei das Scharnier nur ein Beispiel ist, und anstelle des Scharniers auch beispielsweise eine Spannschraube vorgesehen werden kann. Auch ist anstelle einer zweiteiligen Ausführung eine einteilige Ausführung oder eine mehrteilige Ausgestaltung des Schellenrings 1 möglich.

Der Schellenring 1 weist einen ersten Endbereich 11 und an einem entgegengesetzten Ende des Schellenrings 1 einen zweiten Endbereich 12 auf, der dem ersten Endbereich 11 gegenüberliegt. Im dargestellten Ausführungsbeispiel sind beide Endbereiche 11 und 12 als Flansche ausgebildet, es sind aber auch Ausgestaltungen denkbar, bei denen nur einer, insbesondere nur der zweite Endbereich 12, als Flansch ausgeführt ist, oder bei denen keiner der Endbereiche ein Flansch ist. Zwischen den beiden Endbereichen 11 und 12 ist eine Einführöffnung 6 gebildet, durch welche der längliche Gegenstand von aussen radial in den Aufnahmeraum 5 des Schellenrings 1 eingeführt werden kann.

Um die Einführöffnung 6 nach dem Durchtritt des länglichen Gegenstands in den Aufnahmeraum 5 zu verschliessen, das heisst um den Schellenring 1 zu einem geschlossenen Ring zu schliessen, weist der Schellenring 1 einen Verschluss auf. Dieser Verschluss besteht zumindest aus einem am ersten Endbereich 11 am Schellenring 1 befestigten Verschlusszapfen 20 mit einer Hinterschneidung 21, einer den Schellenring 1 im zweiten Endbereich 12 durchlaufenden Durchgangsöffnung 15 für den Verschlusszapfen 20 und einer am zweiten Endbereich 12 angeordneten Verschlussklappe 30 zum Fangen des Verschlusszapfens 20 in der Durchgangsöffnung 15, insbesondere an der Hinterschneidung 21 des Verschlusszapfens 20.

Im gezeigten Ausführungsbeispiel ist der Verschlusszapfen 20 als Spannschraube ausgeführt, welche einen mit dem Schellenring 1 in dessen ersten Endbereich 11 verschraubten Schraubenschaft 23 sowie einen Schraubenkopf 22 aufweist, an welchem die Hinterschneidung 21 gebildet ist. Anstelle einer Spannschraube könnte auch eine gezahnte oder geschlitzte Raststange als Verschlusszapfen 20 zum Einsatz kommen.

Die Verschlussklappe 30 läuft durch die Durchgangsöffnung 15 für den Verschlusszapfen 20 hindurch. Hierdurch ist ein Gelenk, insbesondere Drehgelenk, mit einer in Figur 2 angedeuteten Schwenkachse 99 gebildet, um welches die Verschlussklappe 30 zwischen einer Durchgangsposition, in welcher die Hinterschneidung 21 des Verschlusszapfens 20 freigegeben ist, und einer Fangposition, in welcher die Hinterschneidung 21 des Verschlusszapfens 20 von der Verschlussklappe 30 gefangen ist, schwenken kann. Da das Gelenk erfindungsgemässe direkt an der Durchgangsöffnung 15 gebildet ist, können die Gelenkhebel, das heisst die Verschlussklappe 30 und der zweite Endbereich 12, entsprechend kurz und somit materialsparend ausgebildet werden. Vorzugsweise liegt die Verschlussklappe 30 in der Fangposition grösstenteils am Schellenring 1 an und ist in der Durchgangsposition grösstenteils vom Schellenring 1 abgehoben. Die Figuren zeigen die Verschlussklappe 30 in der Fangposition.

Die Verschlussklappe 30 weist einen Fangbereich 31 zum Fangen, das heisst zum formschlüssigen Halten, des Verschlusszapfens 20, insbesondere an seiner Hinterschneidung 21, auf. Dieser Fangbereich 31 kann wie dargestellt vorzugsweise U-förmig ausgebildet sein, damit der Verschlusszapfen 20 für eine besonders gute Kraftübertragung umgriffen werden kann. Aber auch andere Ausführungsbeispiele sind denkbar. An den Fangbereich 31 schliesst sich ein Durchführbereich 32 der Verschlussklappe 30 an, an welchem die Verschlussklappe 30 die Durchgangsöffnung 15 durchläuft. Fangbereich 31 und Durchführbereich 32 bilden dabei die Schenkel einer L-Form. An den Durchführbereich 32 wiederum schliesst sich ein Rückbereich 33 der Verschlussklappe 30 an, der aber nicht zwingend vorhanden sein muss, und dessen Funktion weiter unten erläutert ist. Fangbereich 31, Durchführbereich 32 und Rückbereich 33 bilden die Schenkel eine Z-Form, wobei der Durchführbereich 32 zwischen dem Fangbereich 31 und dem Rückbereich 33 angeordnet ist.

Wie in den Figuren dargestellt läuft die Verschlussklappe 30 im Bereich einer dem Aufnahmeraum 5 für den länglichen Gegenstand zugewandten Aussenwand 16 der Durchgangsöffnung 15 durch die Durchgangsöffnung 15 hindurch, das heisst das Gelenk und die Schwenkachse 99 sind schellenaussenseitig, im Bereich der dem Aufnahmeraum fernen Aussenwand an der Durchgangsöffnung 15 angeordnet und der Fangbereich 31 der Verschlussklappe 30 schwenkt beim Übergang von der Fangposition in die Durchgangsposition von Aufnahmeraum 5 hinweg nach aussen. Hierdurch kann eine noch kompaktere Bauform erhalten werden. Grundsätzlich könnte das Gelenk aber auch schelleninnenseitig oder seitlich an der Durchgangsöffnung 15 angeordnet sein.

Damit die Verschlussklappe 30 nach dem Durchgang des Verschlusszapfens 20 durch die Durchgangsöffnung 15 selbsttätig wieder in die Fangposition zurückkehrt, ist ein elastischer Ring 50 vorgesehen, welcher die Verschlussklappe 30 in die Fangposition drängt. Dieser elastische Ring 50, der insbesondere ein Gummiring sein kann, umspannt den Schellenring 1 in seinem zweiten Endbereich 12. Wie in den Figuren dargestellt ist, kann der elastische Ring 50 vorzugsweise am Rückbereich 33 der Verschlussklappe 30, an einer der Einführöffnung 6 für den länglichen Gegenstand und/oder dem erste Endbereich 11 zugewandten Seite der Verschlussklappe 30, gegen die Verschlussklappe 30 wirken und dort an der Verschlussklappe 30 anliegen. Hierdurch kann in konstruktiv besonders einfacher Weise ein besonders zuverlässiger Verschluss realisiert werden, bei dem insbesondere der elastische Ring 50 vom Verschlusszapfen 20 weitestgehend ferngehalten wird. Grundsätzlich sind aber auch Ausgestaltungen denkbar, bei denen der elastische Ring 50 gegen den Fangbereich 31 wirkt.

Die Verschlussklappe 30 weist einen Hakenbereich 34 auf, der sich auf der dem Aufnahmeraum 5 abgewandten Seite des Rückbereichs 33 an den Rückbereich 33 anschliesst, wobei der Hakenbereich 34 und der Rückbereich 33 zusammen einen Haken für den elastische Ring 50 bilden. Die Verschlussklappe 30 ist mittels dieses Hakens in den elastischen Ring 50 eingehakt. Hierdurch kann die Verschlussklappe 30 in besonders einfacher Weise am Schellenring 1 gesichert werden, insbesondere ins Schelleninnere hin. In entgegengesetzter Richtung wird die Verschlussklappe 30 von der Aussenwand 16 gesichert. Insbesondere bilden der Hakenbereich 34 und der Rückbereich 33 die Schenkel einer L-Form. Insgesamt ist die Verschlussklappe 30 damit W-förmig, das heisst zweifach abgewinkelt, vorzugsweise um 90° abgewinkelt, ausgebildet.

Der Fangbereich 31 der Verschlussklappe 30 ist an einer der Einführöffnung 6 abgewandten Aussenseite des Schellenrings 1 angeordnet, der Rückbereich 33 und der Hakenbereich 34 an einer der Einführöffnung 6 zugewandten Innenseite des Schellenrings 1, und der Durchführbereich 32 verbindet die Aussenseite und die Innenseite. Die Schwenkachse 99 des Gelenks verläuft vorzugsweise parallel zur Längsrichtung des Aufnahmeraums 5 und/oder vorzugsweise auf der der Einführöffnung 6 zugewandten Innenseite des Schellenrings 1.

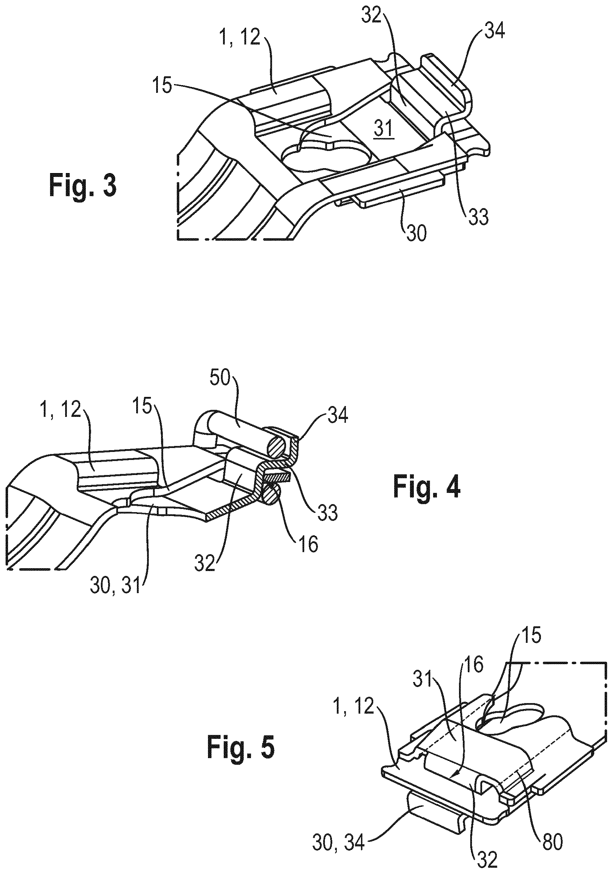

Wie insbesondere in Figur 3 angedeutet ist, kann die Verschlussklappe 30 im Fangbereich 31 auf entgegengesetzten Seiten seitlich über den zweite Endbereich 12 des Schellenrings 1 überstehen, damit die Verschlussklappe 30 zum manuellen Öffnen der Verschlussklappe 30 zwischen zwei Fingern gegriffen werden kann.

Wie die Figuren 1 bis 4 zeigen, kann der zweite Endbereich 12 des Schellenrings 1 topfartig vertieft sein, und die Verschlussklappe 30 kann in ihrem Fangbereich 31 wie insbesondere in Figur 5 erkennbar ist eine korrespondierende Vertiefung aufweisen, in welcher die Vertiefung des Schellenrings 1 aufgenommen ist. Hierdurch sind entlang der in Figur 5 dargestellten Strichlinien 80 zwei Verhakungen zwischen Verschlussklappe 30 und Schellenring 1 gegeben, die einem Durchziehen des gefangenen Verschlusszapfen 20 durch die Durchgangsöffnung 15 unter Verbiegung des Fangbereichs 31 der Verschlussklappe 30 entgegenwirken.

Bei der Verwendung der Schelle wird ein länglicher Gegenstand, beispielsweise ein Rohr, durch die Einführöffnung 6 in den Aufnahmeraum 5 eingebracht. Sodann wird der Verschlusszapfen 20 in die Durchgangsöffnung 15 eingesteckt. Beim Einstecken des Verschlusszapfens 20 in die Durchgangsöffnung 15 drängt der Verschlusszapfen 20 zunächst die Verschlussklappe 30 am Gelenk um die Schwenkachse 99 herum von der Fangposition in die Durchgangsposition, was eine ungehinderte Passage des Verschlusszapfens 20, insbesondere seines Schraubenkopfs 22, durch den zweiten Endbereich 12 des Schellenrings 1 erlaubt. Der elastische Ring 50 zieht sodann nach dem Passieren des Schraubenkopfs 22 die Verschlussklappe 30 wieder um die Schwenkachse 99 herum in die Fangposition zurück. In dieser Fangposition kann die Hinterschneidung 21 die Verschlussklappe 30 nicht mehr passieren, das heisst der Verschlusszapfen 20 ist am zweiten Endbereich 12 gesichert und die Schelle somit geschlossen.

## Patentansprüche

1. Schelle aufweisend einen Schellenring (1) mit einem Aufnahmeraum (5) zum Aufnehmen eines länglichen Gegenstandes, eine Einführöffnung (6) zum Einführen des länglichen Gegenstandes in den Aufnahmeraum (5) und einen Verschluss zum Verschliessen der Einführöffnung (6), wobei der Verschluss einen an einem ersten Endbereich (11) des Schellenrings (1) am Schellenring (1) angeordneten Verschlusszapfen (20), eine an einem zweiten Endbereich (12) des Schellenrings (1) im Schellenring (1) angeordnete Durchgangsöffnung (15) für den Verschlusszapfen (20) und eine am zweiten Endbereich (12) des Schellenrings (1) angeordnete Verschlussklappe (30) zum Fangen des Verschlusszapfens (20) in der Durchgangsöffnung (15) aufweist,
**dadurch gekennzeichnet,**
**dass** die Verschlussklappe (30) die Durchgangsöffnung (15) für den Verschlusszapfen (20) unter Bildung eines Gelenks durchläuft.

2. Schelle nach Anspruch 1,
**dadurch gekennzeichnet,**
**dass** sie einen elastischen Ring (50) zum Schliessen der Verschlussklappe (30) aufweist, welcher den zweiten Endbereich (12) des Schellenrings (1) umspannt.

3. Schelle nach Anspruch 2,
**dadurch gekennzeichnet,**
**dass** die Verschlussklappe (30) in den elastischen Ring (50) eingehakt ist.

4. Schelle nach einem der Ansprüche Anspruch 2 oder 3
**dadurch gekennzeichnet,**
**dass** der elastische Ring (50) an einer der Einführöffnung (6) zugewandten Seite der Verschlussklappe (30) gegen die Verschlussklappe (30) wirkt.

5. Schelle nach einem der vorstehenden Ansprüche,
**dadurch gekennzeichnet,**
**dass** die Verschlussklappe (30) die Durchgangsöffnung (15) an einer dem Aufnahmeraum (5) zugewandten Aussenwand (16) der Durchgangsöffnung (15) durchläuft.

6. Schelle nach einem der vorstehenden Ansprüche,
**dadurch gekennzeichnet,**
**dass** der Verschlusszapfen (20) eine Schraube mit einem Schraubenkopf (22) ist, wobei die Verschlussklappe (30) zum Fangen des Schraubenkopfs (22) vorgesehen ist.

## Claims

1. Clamp, comprising a clamp ring (1) having a receiving space (5) for receiving an elongate object, an insertion opening (6) for inserting the elongate object into the receiving space (5), and a closure for closing the insertion opening (6), the closure having a closure pin (20) arranged on the clamp ring (1) at a first end region (11) of the clamp ring (1), a through opening (15) arranged in the clamp ring (1) at a second end region (12) of the clamp ring (1) for the closure pin (20), and a closure flap (30) arranged at the second end region (12) of the clamp ring (1) for catching the closure pin (20) in the through opening (15),
**characterized in that**,
the closure flap (30) passes through the through opening (15) for the closure pin (20) in order to form a hinge.

2. Clamp according to claim 1,
**characterized in that**
it has an elastic ring (50) for closing the closure flap (30) that spans the second end region (12) of the clamp ring (1).

3. Clamp according to claim 2,
**characterized in that**
the closure flap (30) is hooked into the elastic ring (50).

4. Clamp according to either of claims 2 or 3,
**characterized in that**
the elastic ring (50) acts against the closure flap (30) on a side of the closure flap (30) facing the insertion opening (6).

5. Clamp according to any of the preceding claims,
**characterized in that**
the closure flap (30) passes through the through opening (15) at an outer wall (16) of the through opening (15) facing the receiving space (5).

6. Clamp according to any of the preceding claims,
**characterized in that**
the closure pin (20) is a screw having a screw head (22), the closure flap (30) being provided for catching the screw head (22).

## Revendications

1. Pince présentant une bague de serrage (1) comportant un espace de réception (5) permettant de recevoir un objet allongé, une ouverture d'insertion (6) permettant d'insérer l'objet allongé dans l'espace de réception (5) et une fermeture permettant de fermer l'ouverture d'insertion (6), la fermeture présentant une cheville de fermeture (20) disposée sur la bague de serrage (1) au niveau d'une première zone d'extrémité (11) de la bague de serrage (1), une ouverture de passage (15) disposée dans la bague de serrage (1) au niveau d'une seconde zone d'extrémité (12) de la bague de serrage (1) pour la cheville de fermeture (20) et un clapet de fermeture (30) disposé au niveau de la seconde zone d'extrémité (12) de la bague de serrage (1) et permettant de coincer la cheville de fermeture (20) dans l'ouverture de passage (15),
**caractérisée en ce**
**que** le clapet de fermeture (30) traverse l'ouverture de passage (15) pour la cheville de fermeture (20) en formant une articulation.

2. Pince selon la revendication 1,
**caractérisée en ce**
**qu'**elle présente une bague élastique (50) permettant de fermer le clapet de fermeture (30), laquelle bague élastique s'étend sur la seconde zone d'extrémité (12) de la bague de serrage (1).

3. Pince selon la revendication 2, **caractérisée en ce**
**que** le clapet de fermeture (30) est accroché dans la bague élastique (50).

4. Pince selon l'une des revendications 2 ou 3
**caractérisée en ce**
**que** la bague élastique (50) agit contre le clapet de fermeture (30) sur un côté du clapet de fermeture (30) faisant face à l'ouverture d'insertion (6).

5. Pince selon l'une des revendications précédentes,
**caractérisée en ce**
**que** le clapet de fermeture (30) traverse l'ouverture de passage (15) au niveau d'une paroi extérieure (16) de l'ouverture de passage (15) faisant face à l'espace de réception (5).

6. Pince selon l'une des revendications précédentes,
**caractérisée en ce**
**que** la cheville de fermeture (20) est une vis comportant une tête de vis (22), le clapet de fermeture (30) étant prévu pour permettre de coincer la tête de vis (22).
